# EUROPEAN PATENT APPLICATION

(11) **EP 2 374 720 A1**
(43) Date of publication of application: **12.10.2011**
(21) Application number: 10159350.7
(22) Date of filing: 08.04.2010
(51) Int. Cl.: B65D 1/14, B65D 1/24, B65D 1/36, B65D 81/32, B65D 25/32, B65D 21/02, A47J 47/18

(54) **Injection moulded container in one part and of plastic material**

(71) Applicant: Golden Nugget B.V., 4844 BP Terheijden (NL)
(72) Inventor: Blondeel, Etienne Herman Walter, 4811 BP, TERHEIJDEN (NL)
(74) Representative: Roelands, Olaf

(57) **Abstract**

Injection-moulded container (1) in one part and of plastic material, comprising a bottom part (2), an upright wall (3) surrounding the bottom part, an upper edge (5) of the upright wall, wherein the upper edge surrounds the open side of the container and wherein the upper edge is provided with a storage functionality for separate objects. In particular a container wherein the storage functionality comprises indentations (7) in the upper edge and/or a platform (9) present at the position of the upper edge and on the outer side thereof.

## Description

The invention relates to an injection-moulded container in one part and of plastic material, comprising a bottom part, an upright wall surrounding the bottom part, an upper edge of the upright wall, wherein the upper edge surrounds the open side of the container.

Such containers are well known in the form of a bucket or bowl. Depending on the use thereof, various separate objects are used, which are set down in the vicinity of the container. The separate objects can become soiled or be lost by being set down in unsuitable places.

The invention has for its object to provide a container which simplifies the use of the bucket by providing a solution for the storage space of the separate objects. It is also an object of the invention to provide this with an injection-moulded container in one part so that a very simple method of production can be achieved by injection-moulding in a simple mould in a single passage, also referred to as 'single shot'. The invention further has for its object to provide some other additional functionalities which can likewise be formed via a single shot.

This object is achieved with the container of the above stated type, wherein the upper edge is provided with a storage functionality for separate objects.

Thus is achieved that the container is formed in one part and has the storage functionality in the vicinity of the work height, i.e. the open side of the container. As separate objects it is possible here to envisage cleaning brushes, sponges, chamois leathers, squeegees, wipers, etc.

The invention preferably comprises indentations in the upper edge as storage functionality. Depending on the dimensions of the object, the indentations are of suitable size to clamp the object. Alternatively, the indentation provides the option of hooking an object thereon.

The invention can here also comprise as storage functionality a platform provided at the position of the upper edge and on the outer side thereof. This is an ideal position both during use and in production of the container. The platform provides the option of putting objects down separately, for instance as alternative to the indentations, when these do not serve for the purpose.

In a subsequent embodiment of the container according to the invention the outer edge of the platform is provided with an upright edge. The outer edge provides a safeguard against objects accidentally sliding off the platform, and moreover collects leaking water. It is advantageous here that the leaking water can flow back into the container through suitable positioning of the platform relative to the upper edge of the container.

In the container according to the invention the storage functionality is more preferably tiltable over a flexible hinge part between the storage functionality and the container. The outer periphery of the container can thus be reduced by folding the storage functionality inward. During use the storage functionality is in folded-out position. The hinge part, which is moulded integrally with the container, is for instance a part which has a small thickness in order to enhance the flexibility and, if desired, is provided with perforations for the purpose of flexibility.

In a specific embodiment the storage functionality of the container comprises a rack of upright ribs and/or partitions between which objects can be placed. It is possible to envisage for instance a rack in the form of a dish rack, in which dishes can be placed which have been washed in the container. It is however equally possible for this to be a rack in which tools or separate objects as referred to above are placed.

In a subsequent specific embodiment of the container according to the invention the storage functionality comprises a measuring cup which can be tilted over the hinge part toward the opening of the container. Particularly when the container is used for filling with a solution of cleaning agent, the measuring cup is suitable for measuring the correct quantity of cleaning agent.

The container according to the invention can further comprise on the upper edge a handle which can be tilted over a hinge part between upper edge and handle. It is thus possible to provide a container in one part complete with handle. This avoids the handle having to be assembled as separate component with an injection-moulded container.

The container according to the invention is preferably stackable on the same type of container, wherein the shaping is adapted such that the outer side of the one container can be inserted into the interior of the other container. The storage space for a group of containers is thus kept as small as possible, and they remain together as a group.

The container according to the invention more specifically takes the form of a rectangular bowl or a cylindrical bucket. It is precisely for these shapes that the provision of a storage functionality is of great value, as further elucidated in this description.

The container according to the invention is advantageously printed with an image by means of in-mould labelling. This technique allows an image to be incorporated in the injection mould prior to the step of injection moulding. The image is thus unified with the injection-moulded container in a single simple step.

In the container according to the invention a partition is more preferably provided in the space inside the upright wall. Certainly when connected to the bottom part, a partition can divide the volume of the container into two compartments, in which different solutions are for instance present. It is advantageous here to moreover provide the partition with a storage functionality for separate objects, such as for instance a platform or a cavity. A handle can further be combined with the partition for the purpose of picking up the container.

In a preferred embodiment the container according to the invention is injection moulded from a single plastic material, for instance polypropylene. Diverse plastics are suitable for the container subject to the intended use, as known to the skilled person. The advantage of a single material is the simplicity of the injection moulding and the possibility of keeping production costs low.

As an alternative embodiment, the container according to the invention can be injection moulded from more than one plastic material, comprising for instance polypropylene and a rubber. Use is preferably made of two materials which are injection moulded via the 2K technique (2-component injection moulding), wherein different components are manufactured from different materials. The bottom and the upright wall are here moulded from for instance polypropylene, and a platform, the hinge part and the edge from rubber. The rubber has a greater flexibility, this improving the deformability of the hinge part. Indentations in the upper edge are also more readily flexible. Finally, rubber has a rougher surface, whereby separate objects on a platform are less likely to shift.

The invention will be elucidated hereinbelow with reference to two figures, in which:
Figure 1 is a view of a bucket according to the invention;
Figure 2 is a view of a washing-up bowl according to the invention.

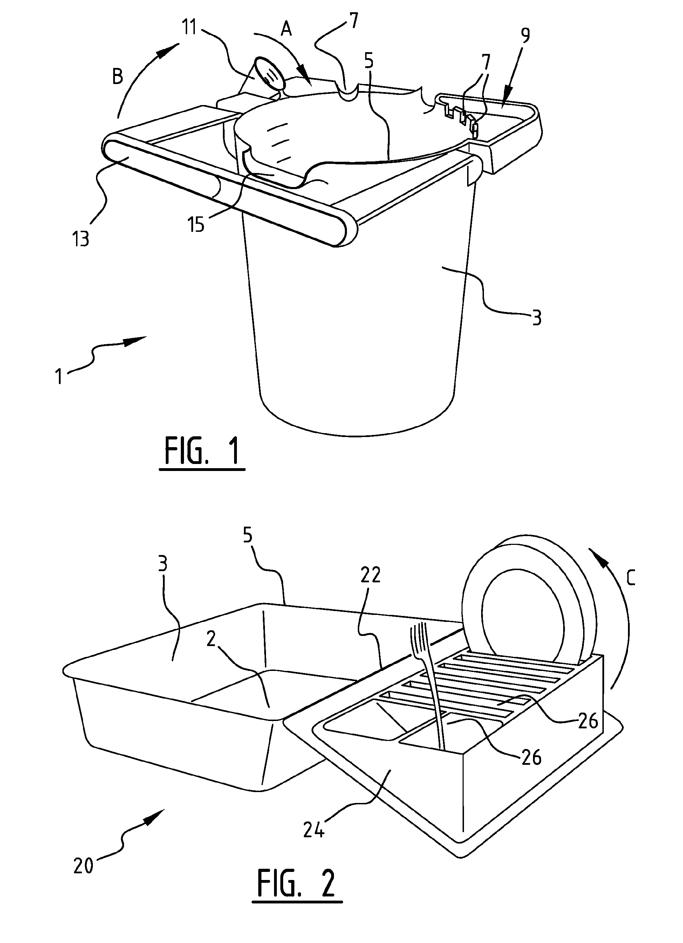

Figure 1 shows an injection-moulded bucket 1 with upright wall 3, the upper edge 5 of which is provided with indentations 7 of various shapes, i.e. rectangular and round. The round recess is suitable for clamping therein a handle of for instance a wiper or squeegee. Also provided is a platform 9 with an upright edge for placing of for instance a sponge. The edge is also provided with a measuring cup 11, the tilting direction of which is indicated with arrow A. The measuring cup is connected to the edge via a flexible hinge part which is not further shown. The bucket is further provided with a handle 13 which is injection-moulded together with the above stated components in one passage and in one part. Arrow B indicates the tilting direction of handle 13. The handle is connected to the edge of the bucket via a flexible hinge part which is not further shown. Upper edge 5 is provided with a pouring spout 15.

Figure 2 shows a square washing-up bowl 20 with a bottom part 2 and an upright wall 3 with upper edge 5. Provided along an elongate side of upper edge 5 is a hinge part 22 which is connected to a dish rack 24 constructed from a rack of diverse partitions 26. Arrow C indicates the tilting direction of dish rack 24. Washing-up bowl 20 can be folded together into a compact form after use, wherein rack 24 is present in the space enclosed by upright wall 3.

## Claims

1. Injection-moulded container in one part and of plastic material, comprising a bottom part, an upright wall surrounding the bottom part, an upper edge of the upright wall, wherein the upper edge surrounds the open side of the container and wherein the upper edge is provided with a storage functionality for separate objects.

2. Container as claimed in claim 1, wherein the storage functionality comprises indentations in the upper edge.

3. Container as claimed in any of the foregoing claims, wherein the storage functionality comprises a platform provided at the position of the upper edge and on the outer side thereof.

4. Container as claimed in claim 3, wherein the outer edge of the platform is provided with an upright edge.

5. Container as claimed in any of the foregoing claims, wherein the storage functionality is tiltable over a flexible hinge part between the storage functionality and the container.

6. Container as claimed in claim 5, wherein the storage functionality comprises a rack of upright ribs and/or partitions between which objects can be placed.

7. Container as claimed in claim 5, wherein the storage functionality comprises a measuring cup which can be tilted over the hinge part toward the opening of the container.

8. Container as claimed in any of the foregoing claims, wherein a handle is provided on the upper edge which can be tilted over a hinge part between upper edge and handle.

9. Container as claimed in any of the foregoing claims, wherein the container is stackable on the same type of container, wherein the shaping is adapted such that the outer side of the one container can be inserted into the interior of the other container.

10. Container as claimed in any of the foregoing claims, wherein the container takes the form of a rectangular bowl or a cylindrical bucket.

11. Container as claimed in any of the foregoing claims, wherein the container is printed with an image by means of in-mould labelling.

12. Container as claimed in any of the foregoing claims, wherein a partition is provided in the space inside the upright wall.

13. Container as claimed in any of the foregoing claims, wherein the container is injection moulded from a single plastic material, for instance polypropylene.

14. Container as claimed in any of the foregoing claims 1-12, wherein the container is injection moulded from more than one plastic material, comprising for instance polypropylene and a rubber.
